**Europäisches Patentamt**

**European Patent Office**

**Office européen des brevets**

(19)

(11) Veröffentlichungsnummer: **0 019 727**

**B1**

(12) **EUROPÄISCHE PATENTSCHRIFT**

(45) Veröffentlichungstag der Patentschrift: **29.06.83**

(51) Int. Cl.³: **H 02 G 7/20**

(21) Anmeldenummer: **80102265.8**

(22) Anmeldetag: **26.04.80**

(54) Schutzeinrichtung gegen die Folgen eines Isolatorenbruches bei Mehrfach-Isolatorenketten.

(30) Priorität: **31.05.79 DE 2922158**

(43) Veröffentlichungstag der Anmeldung:
**10.12.80 Patentblatt 80/25**

(45) Bekanntmachung des Hinweises auf die Patenterteilung:
**29.06.83 Patentblatt 83/26**

(84) Benannte Vertragsstaaten:
**AT CH LI NL**

(56) Entgegenhaltungen:
**DE - A - 1 919 754**
**DE - B - 1 039 590**
**DE - B - 1 204 725**
**DE - B - 1 274 706**
**DE - B - 1 286 168**
**DE - C - 974 801**

(73) Patentinhaber: **RICHARD BERGNER GMBH & CO**
**Bahnhofstrasse 8-16**
**D-8540 Schwabach (DE)**

(72) Erfinder: **Möcks, Lotar, ing.grad.**
**Am Hohen Hof 17**
**D-8540 Rednitzhembach (DE)**

(74) Vertreter: **Tergau, Enno et al,**
**Hefnersplatz 3 Postfach 9347**
**D-8500 Nürnberg 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Schutzeinrichtung gegen die Folgen eines Isolatorenbruches bei Mehrfach-Isolatorenketten

Die Erfindung geht aus von einer Schutzeinrichtung gegen die Folgen eines Isolatorenbruches bei Mehrfach-Isolatorenketten, insbesondere Hängeketten von Hochspannungsfreileitungen, welche Hängeketten aus mindestens zwei, über Abstandhalter gelenkig mit dem tragenden bzw. dem zu tragenden Teil der Aufhängung verbundenen Hochspannungs-Isolatoren bestehen.

Die Erfindung bezweckt, die Folgen eines Isolatorenbruches bei aus mindestens zwei nebeneinander angeordneten Hochspannungsisolatoren gebildeten Hängeketten gering zu halten.

In erster Linie werden hier Hängeketten mit Einpunktübergang zur Traverse des Mastes betrachtet. Bei derartigen Hängeketten besteht im Falle, daß ein Isolator bricht, die Gefahr, daß die Reststücke des gebrochenen Isolators um die Schwenkachse der Hänge-Öse herumschwenkend auf den benachbarten unbeschädigt gebliebenen Isolator schlagartig auftreffen und diesen Isolator entweder schwer beschädigen oder aber — was wahrscheinlicher ist — ebenfalls zerstören. In weiterer Folge kann der Bruch eines einzelnen Isolators unter Umständen die Beschädigung von Isolatorenketten anschließender Leitungsfelder nach sich ziehen.

Zwar sind bereits Einrichtungen für Abspannketten bekannt, mit denen sich die Auswirkunggen der bei Bruch eines Isolators in einem Abspannkettenstrang auftretenden Kraftumlagerungen auf ein unschädliches Maß mildern lassen (DE—U—78 11 354). Dies wird durch zweckmäßig angeordnete Massenanhäufungen erreicht. Indessen handelt es sich hier um die Milderung der unmittelbar nach dem Isolatorbruch auf den Isolator einwirkenden hohen Querbeschleunigungen, die für Porzellan-Isolatoren quer zu ihrer Längserstreckung besonders schädlich sind. Solche Beanspruchungen aus Querbeschleunigungen haben jedoch mit der "hammerschlagartigen" Beanspruchung die durch vorliegende Erfindung verhindert werden soll, nicht zu tun.

Aus dem DE—U—78 00 627 ist ferner ein Bremselement für Abstandhalter an Zweifach-Abspannketten bekannt, bei dem zwei Isolatorenketten über zwei Dreieckabstandhalter und über Gelenke mit einem Doppelseil über Abspannklemmen gelenkig verbunden sind. Hierbei werden in zwei dreieckförmige Räume, die jeweils von zwei Aufhängelaschen sowie einem dreieckförmigen Abstandhalter gebildet werden, von außen her winkelförmige Bremselemente eingeschraubt. Diese speziell für Abspannketten gedachte Bremseinrichtung, die bei Anwendung in Hängeketten deren Bauhöhe vergrößern würde, soll ausschließlich die vorerwähnten nachteiligen Querbeschleunigungen auf die Isolatoren mindern. Hingegen kann das bekannte Bremselement nicht die gefürchtete Schwenkbewegung des gebrochenen Isolators verhindern.

Aus der DE—A—19 19 754 ist ferner eine Anordnung zum Aufhängen von elektrischen Hochspannungsfreileitungen unter Verwendung einer Isoliereinheit mit zwei möglichst dicht beieinander angeordneten Hängeisolatoren und mindestens einem Verbindungsstück bekannt, wobei die beiden Isolatoren oben und unten mit symmetrischen Verbindungsstücken verbunden sind, deren jedes U-förmig gestaltet ist. Hierdurch soll nicht nur eine größere Biegebeanspruchung des gesunden Isolators im Falle, daß der zweite Isolator zu Bruch geht, vermieden werden, sondern es soll auch in einem solchen Falle das Leiterseil nur um einen geringen Betrag absinken. Da bei der bekannten Einrichtung die beiden parallelen Isolatoren sehr dicht beieinander liegen müssen, läßt sich eine nachteilige Berührung des gesunden Isolators durch den zu Bruch gegangenen kaum verhindern. Getrennte Schutzarmaturen, wie sie bei Langstabisolatoren notwendig sind, lassen sich nicht anbringen. Auch ist ein vorheriges Zusammenstellen von Isolator-Paaren gleicher effektiver Längen (zulässige Längentoleranz etwa ±3%) unerläßlich, weil sonst beim Zusammentreffen ungünstiger Toleranzen die Abstandhalter sich in unzulässigem Maße schräg einstellen müßten.

Demnach ist es Aufgabe der in den Ansprüchen angegebenen Erfindung, für eine Mehrfach-Isolatorenkette eine Einrichtung zu schaffen, durch die im Falle des Bruches eines Isolators die Gefahr der Beschädigung weiterer Isolatoren durch mechanische Beanspruchung verhindert wird.

Die sehr einfache und darum vorteilhafte Lösung besteht bei einer Schutzeinrichtung der eingangs angegebenen Gattung darin, daß innerhalb des von den Isolatoren und den Abstandhaltern gebildeten Raumes Anschläge angebracht sind.

Die vorteilhafte Wirkung dieser Maßnahme besteht darin, daß eine Schwenkbewegung von Teilen des gebrochenen Isolators zum gesunden Isolator hin behindert und somit die gefürchtete "Hammerschlagwirkung" auf den gesunden Isolator ausgeschlossen ist.

Natürlich lassen sich die erfinderischen Maßnahmen auch gemeinsam mit bereits bekannten Maßnahmen zur Verhinderung des schädlichen Einflusses von Querbeschleunigungen auf die Isolatoren anwenden.

Ein weiterer Vorteil des Gegenstandes der Erfindung besteht darin, daß er sich ohne Öffnen der Ketten unschwer auch nachträglich bei vorhandenen Isolatorenketten einbauen läßt. Der Einbau der Einrichtung nat keinen Einfluß auf die Bauhöhe der Hängekette.

Vorteilhafte Ausgestaltungen sind aus den Ansprüchen 2 bis 14 unschwer zu entnehmen.

Einzelheiten der erfindungsgemäßen Einrichtung sowie weitere erzielte Vorteile gehen aus der nachfolgenden Beschreibung mehrer Ausführungsbeispiele sowie der zugehörigen schematischen Zeichnung hervor; in dieser zwigen.

Figure 1 eine mit der Schutzeinrichtung ausgerüstete Doppel-Hängekette in Seitenansicht,

Figur 2 den mit einem elastischen Zwischenstück versehenen winkelförmigen Anschlag als vergrößerte Einzelheit aus Figur 1,

Figur 3 den winkelförmigen Anschlag ähnlich Figur 2 sowie eine Möglichkeit der nachträglichen Befestigung an einem Abstandhalter,

Figur 4 die Befestigung eines winkelförmig ausgebildeten Anschlages mittels Bolzen an einer Hänge-Öse zum Isolator,

Figur 5 ein als waagerechter Lappen an der Hänge-Öse ausgebildeter Anschlag,

Figur 6 ein T-förmig ausgebildeter Anschlag an den Hänge-Ösen zu zwei senkrecht untereinander angeordneten Isolatoren,

Figure 7 ein mit Sollbruchstellen versehener winkelförmiger Anschlag,

Figur 8 eine für Y/V-förmig ausgebildete Hängeketten geeignete Gestaltung der Anschläge.

Figure 9 die Hängekette gemäß Figur 8 in Richtung des Pfeiles A gesehen und

Figur 10 eine Hängekette mit gebrochenem Isolator, ohne erfindungsgemäßen Anschlag.

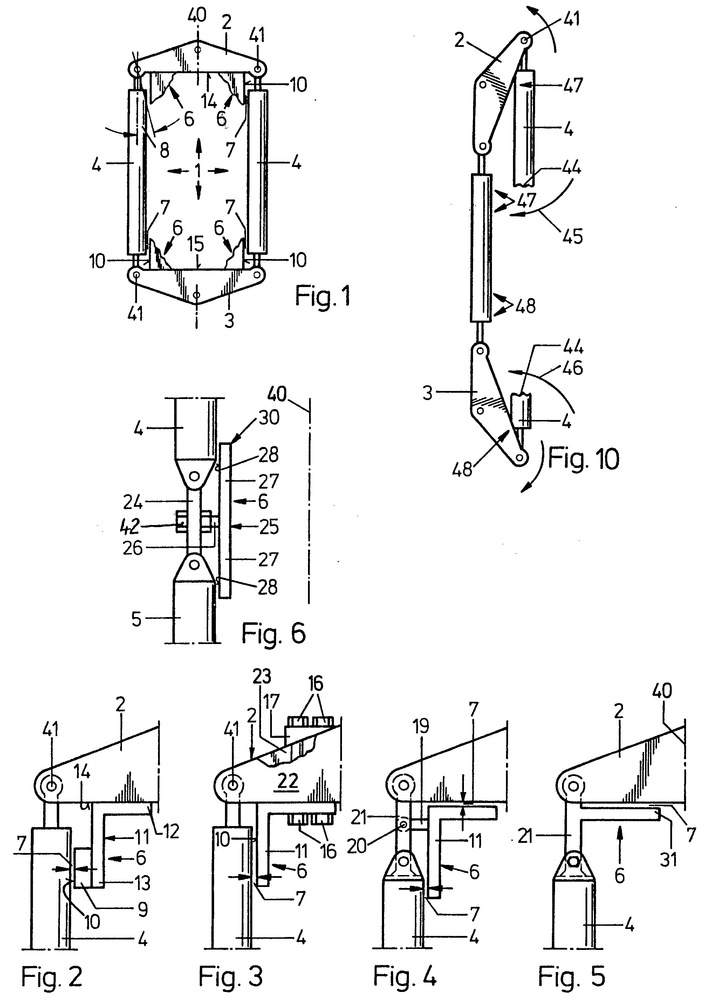

Figur 1 zeigt die allgemeine Anordnung einer Schutzeinrichtung gegen die Folgen eines Isolatorenbruchs bei Mehrfach-Isolatorenketten, insbesondere der Hängeketten von Hochspannungsfreileitungen. Die allgemein mit 1 bezeichnete Hängekette besteht aus zwei über Abstandhalter 2 und 3 gelenkig mit dem tragenden bzw. zu tragenden Teil der Aufhängung verbundenen Hochspannungs-Isolatoren 4. Gegebenenfalls kann unterhalb des oberen Paares Isolatoren 4 mindestens noch ein weiteres Paar Isolatoren 5 angeordnet sein. Die übliche Einpunktaufhängung des oberen Abstandhalters 2 an der traverse des Mastes sowie die untere Aufhängung der Leiterseile an dem unteren Abstandhalter 3 ist hier nicht besonders dargestellt. Außerdem sind hier die Abstandhalter 2 und 3 wie üblich aus zwei parallelen Platten bestehend, wobei zwischen je ein Plattenpaar beispielsweise die Ösen zur Aufhängung der Isolatoren bzw. zur Befestigung an der Traverse und zum Aufhängen der Leitungsseile ragen.

Figur 10 zeigt die verhältnisse bei Bruch eines der Isolatoren 4, beispielsweise bei der Bruchstelle 44. Hierbei schwenkt der Abstandhalter 2 sehr schnell um seinen Aufhängepunkt entgegen dem Uhrzeigersinn. Eine entsprechende Schwenkbewegung, jedoch im Uhrzeigersinn, führt der Abstandhalter 3 aus. In weiterer Folge schwenken — was durch Versuche nachgewiesen wurde — die Teile des gebrochenen Isolators sehr schnell entsprechend den Pfeilen 45 und 46, wodurch je nach Lage der Bruchstelle 44 dur gesunde Isolator durch hammerschlagartige Beanspruchung bei 47 bzw. bei 48 in unzulässiger Weise beansprucht wird. Auch ein Anschlagen in Nähe der Hänge-Ösen an der Abstandhaltern 2, 3 ist in Betracht zu ziehen. Die sich aus Vorstehendem ergebenen Folgeschäden werden durch den Erfindungsgegenstand verhindert.

Für die Erfindung wesentlich ist, daß die Anschläge 6 innerhalb des von den nebeneinander befindlichen Isolatoren 4 und den Abstandhaltern 2 und 3 gebildeten Raumes angebracht ind. Die Raumform des einzelnen Anschlages 6 ist weitgehend beliebig, jedoch muß mindestens eine Anschlagfläche 10 vorhanden sein, die vorzugsweise dur Außenkontur des benachbarten Isolators 4 parallel liegt. Außerdem muß das Paar Anschläge 6 mindestens an dem oberen Abstandhalter 2 vorhanden sein, um zu verhindern, daß ein Teil eines gebrochenen Isolators sich in Richtung zum gesunden Isolator hin bewegt. Zweckmäßigerweise ist auch an dem unteren Abstandhalter 3 je ein Paar Anschläge 6 befestigt. In jedem Falle befinden sich die Anschläge 6 innerhalb des von den Bolzen 41 zu den Ösen 21 der Isolatoren bestimmten Raumes, weil ja ein Verschwenken eines Teiles eines gebrochenen Isolators in Richtung zur lotrechten Mittelebene 40 der gesamten Isolatorenkette verhindert werden soll.

Aus Figure 1 geht ferner hervor, daß zweckmäßigerweise zwischen dem Anschlag 6 und einem der gelenkig miteinander verbundenen Teile, entweder Isolator 4, 5 oder Abstandhalter 2, 3 ein verhältnismäßig kleiner Abstand 7 verbleibt. Hierdurch soll der gesamten Aufhängung ein Verschwenkwinkel 8 in der Größenordnung von 2 bis 5° ermöglicht werden. Dieser Verschwenkwinkel 8 ist schon im Interesse einer statisch bestimmten Aufhängung zweckmäßig; vor allem aber erlaubt er auch den Ausgleich unterschiedlicher Isolatorlängen, durch geringfügiges Schrägstellen der Abstandhalter 2, 3 gegeneinander.

Um zu verhindern, daß ein gebrochener Isolator beim harten Aufschlagen auf den Anschlag 6 weiter zerbricht und die Einzelteile Folgeschäden anrichten, sind am Anschlag 6 in vorteilhalter Weise Zwischenstücke 9 aus einem nachgiebigen Baustoff angebracht. Wie Figur 2 ferner zeigt, hat der Anschlag 6 zweckmäßigerweise die Form eines Winkels 11, dessen einer Schenkel 12 an einer Kante 14 des Abstandhalters 2 anliegt, und dessen anderer Schenkel 13 das parallel zum Isolator 4 liegende Teil 10 bildet.

Selbstverständlich kann der Anschlag 6 auch direkt in einem Arbeitsgang mit dem Abstandhalter 2, 3 gebildet worden sein. Wesentlich ist lediglich, daß der Anschlag 6 als etwa im rechten Winkel aus der entsprechenden Kante des Abstandhalters 2, 3 hervorragendes, über eine zweckmäßige Länge dem Isolator 4, 5 etwa paralleles Teil 10 gestaltet ist.

Ein besonders zweckmäßiges Ausführungsbeispiel ist Figur 2 entnehmbar und besteht darin, daß der Anschlag als Winkel 11 gestaltet und daß ein Schenkel 12 des Winkels an der entsprechenden Kante 14, 15 des zweiteiligen Abstandhalters 2, 3 fest angebracht ist.

Gemäß Figure 3 ist der Winkel 11 mittels zwischen den Wangen 22, 23 des Abstandhalters 2, 3 durchgeführter Schrauben 16 und jeweils einer Keilplatte 17 am Abstandhalter 2, 3 befestigt. Der zweite Schenkel 13 des Winkels 11 verläuft dann parallel der Kontur des Isolators 4. Der Winkel 11 ist in bestehende Ketten leicht nachrüstbar, ohne die Ketten öffnen zu müssen.

Gemäß Figure 4 besteht eine andere Ausgestaltung darin, daß der Anschlag 6 mittels eines Zwischenstückes 19 und eines Bolzen 20 an der Öse 21 zwischen dem Abstandhalter 2 und dem Isolator 4 befestigt ist. Auch in diesem Falle hat der eigentliche Anschlag 6 zweckmäßigerweise die Form eines Winkels 11.

Eine weitere Ausgestaltungsmöglichkeit besteht darin, daß der Anschlag 6 als zur lotrechten Mittellinie 40 der Hängeketteneinheit hinweisender, an der Öse 21 angebrachter und im wesentlichen waagerechter Lappen 31 ausgebildet ist. Die Öse 21 ist mit dem Isolator starr verbunden, z.B. durch spielfreie Anpassung der Öse 21 an die Anschlußarmatur (Kappe) des Isolators oder durch starre Verschraubung (Figur 5).

Sofern die Mehrfach-Isolatorenkette aus mindestens zwei untereinander angeordneten Paaren von Isolatoren 4, 5 gebildet ist, wird zweckmäßigerweise am Ösenteil 24 ebenfalls ein Anschlag 30 angebracht. Dieser ist als T-förmiges Teil 25 ausgebildet und besteht aus einem waagerechten Steg 26, der einstückig mit der Schraube 42 als deren Gewindebolzen ausgebildet und am Ösenteil 24 mittels Muttern befestigt sein kann, sowie aus einem lotrechten Flansch 27. Dieser lotrechte Flansch bildet Anschlagkanten 28, wobei zwischen diesen und dem benachbarten Isolator ebenfalls ein kleiner Abstand 7 bzw. je ein nachgiebiges, in Fig. 6 nicht gezeichnetes elastisches Zwischenstück 9 vorgesehen sein kann. In jedem Fall liegt der lotrechte Flansch 27 des Anschlagmittels 30 ebenfalls in Richtung zur lotrechten Mittelebene 40 der Gesamtaufhängung (Figur 6).

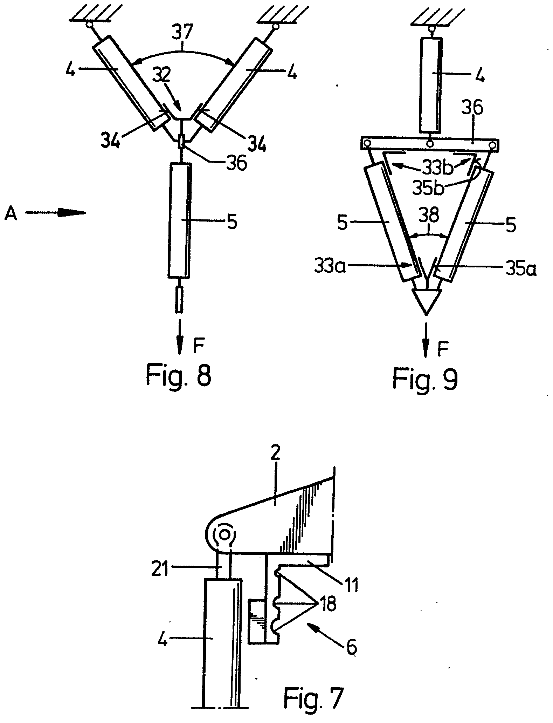

Um die Wirkung des nachgiebigen Zwischenstückes 9 zu verbessern oder auch um dieses Zwischenstück überflüssig zu machen, kann gemäß Figur 7 der als Winkel 11 ausgeformte Anschlag 6 mit einer oder mehreren Sollbruchstellen 18 versehen sein. Es ist auch möglich, den Winkel 11 entsprechend dünn zu dimensionieren, so daß er sich elastisch verformen kann.

Die erfindungsgemäße Schutzeinrichtung läßt sich ferner auch bei Y-Form aufweisenden Isolatorenketten anwenden. Sofern eine derartige Kette wie üblich im senkrecht nach unten weisenden Schenkel des Y zwei parallel zueinander liegende Isolatoren 5 aufweist, werden Anschläge 6 in der vorbeschriebenen Art eingebaut. Sofern beim Winkel 37 des Y das Abstandstück 36 entsprechend verlängert wird lassen sich die Isolatoren 5 in V-Form derart aufhängen, daß sie zur Aufhängeeinrichtung für das Leiterseil einen Winkel 38 bilden, Obwohl bei dieser Y/V-Aufhängung die Isolatoren 5 nicht von einem gebrochenen Isolator 5 beschädigt werden können, läßt sich die Schutzwirkung des Abstandstückes 36 durch Einfügen von Anschlägen 32, 33a, 33b verbessern. Beide Ausführungsformen der Anschläge 32, 33a, 33b zeigen ebenfalls Anschlagflächen 34, 35, die mit einem kleinen Abstand Anschlagflächen 34, 35, die mit einem kleinen Abstand parallel zu den Konturen der benachbarten Isolatoren 4, 5 liegen. Hierbei sind die Anschläge 32 und 33b fest mit dem Abstandstück 36 und der Anschlag 33a mit der Hängeeinrichtung zum Leiterseil F verbunden.

**Patentansprüche**

1. Schutzeinrichtung gegen die Folgen eines Isolatorenbruches bei Mehrfach-Isolatorenketten, insbesondere Hängeketten von Hochspannungsfreileitungen, welche Isolatorenketten aus mindestens zwei, über Abstandhalter (2, 3; 36) gelenkig mit dem tragenden bzw. dem zu tragenden Teil der Aufhängung verbundenen Hochspannungs-Isolatoren bestehen, dadurch gekennzeichnet, daß innerhalb des von den Isolatoren (4, 5) und den Abstandhaltern (2, 3; 36) gebildeten Raumes Anschläge (30; 32; 33a, 33b) angebracht sind.

2. Schutzeinrichtung nach Anspruch 1, dadurch gekennzeichnet, daß zwischen dem Anschlag (6) und jeweils einem der gelenkig miteinander verbundenen Teile (z. B. Isolator 4, 5; Abstandhalter 2, 3) ein verhältnismäßig kleiner Abstand (7) verbleibt und daß dieser Abstand (7) einem Verschwenkwinkel (8) von etwa 2 bis 5° entspricht.

3. Schutzeinrichtung nach Anspruch 1, dadurch gekennzeichnet, daß sich zwischen dem Anschlag (6) und dem diesem benachbarten Isolator (4, 5) ein Zwischenstück (9) aus einem elastischen Werkstoff befindet.

4. Schutzeinrichtung nach einem der Ansprüche 1 bis 3, dadurch gekennzeichnet, daß der Anschlag (6) als etwa im rechten Winkel aus der entsprechenden Kante (14, 15) des Abstandhalters (2, 3) hervorragendes, über eine bestimmte Länge dem Isolator (4, 5) etwa paralleles Teil (10) gestaltet ist.

5. Schultzeinrichtung nach Anspruch 4, dadruch gekennzeichnet, daß der Anschlag als Winkel (11) gestaltet und daß ein Schenkel (12) des Winkels an den entsprechenden Kanten (14, 15) des Abstandhalters (2, 3) befestigt ist.

6. Schutzeinrichtung nach Anspruch 5, dadurch gekennzeichnet, daß der Winkel (11) mittels jeweils zwischen zwei Wangen (22, 23) des Abstandhalters (2, 3) durchgeführter Schrauben (16) und Keilplatte (17) am Abstandhalter (2, 3) befestigt ist.

7. Schutzeinrichtung nach einem der Ansprüche 1 bis 3, dadurch gekennzeichnet, daß der Anschlag (6) mittels eines Zwischenstückes (19) und eines Bolzens (20) an der Öse (21) zwischen Abstandhalter (2) und Isolator (4) befestigt ist.

8. Schutzeinrichtung nach einem der Ansprüche 1 bis 3, dadurch gekennzeichnet, daß der Anschlag (6) an der Öse (21) zwischen dem Isolator (4) und dem Abstandhalter (2) befestigt ist.

9. Schutzeinrichtung nach Anspruch 8, dadurch gekennzeichnet, daß der Anschlag (6) als zur lotrechten Mittellinie (40) der Hängeketten-Einheit (1) hinweisender, an der Öse (21) angebrachter, im wesentlichen waagerechter Lappen (31) ausgebildet ist.

10. Schutzeinrichtung nach einem der Ansprüche 1 bis 3 für Mehrfach-Isolatorenketten, die mindestens zwei hintereinander hängende, gelenkig miteinander verbundene Isolatoren (4, 5) aufweisen, dadurch gekennzeichnet, daß mit der Öse (24) zwischen zwei Isolatoren (4, 5) ein T-förmiger, aus einem etwa waagerechten Steg (26) und einem lotrechten Flansch (27) mit den Isolatoren (4, 5) parallelen Anschlagkanten (28) bestehender Anschlag (30) verbunden ist.

11. Schutzeinrichtung nach einem der Ansprüche 4 oder 10, dadurch gekennzeichnet, daß der dem Isolator (4, 5) parallele Teil des Anschlages (6; 30) mindestens eine Sollbruchstelle (18) aufweist.

12. Schutzeinrichtung nach Anspruch 1, dadurch gelennzeichnet, daß bei Doppelhängeketten mit Rechteckform mindestens beim oberen Abstandhalter (2) ein Paar Anschläge (6) angebracht ist.

13. Schutzeinrichtung nach Anspruch 12, dadurch gekennzeichnet, daß beim oberen und beim unteren Abstandhalter (2 und 3) je ein Paar Anschläge (6) angebracht ist.

14. Schutzeinrichtung nach Anspruch 1, dadurch gekennzeichnet, daß bei Hängeketten in Y/V-Form die Anschläge (32; 33a) mindestens im nach oben offenen, durch die entsprechenden Isolatoren-Paare (4 bzw. 5) gebildeten Öffnungs-Winkel (37; 38) des Y bzw. V angeordnet sind.

15. Schnutzeinrichtung nach Anspruch 14, dadurch gekennzeichnet, daß die Anschlagflächen (34, 35) der mit den Ösen zu den Isolatoren (4, 5) verbundenen Anschläge (32, 33a) miteinander je einen spitzen Winkel bilden.

16. Schutzeinrichtung nach Anspruch 14, dadurch gekennzeichnet, daß innerhalb des von den Isolatoren (5) und dem Abstandstücke (36) gebildeten Dreiecks drei Anschläge (33a, 33b) angebracht sind.

## Revendications

1. Dispositif de protection contre les effets d'une brisure d'isolateur dans des chaînes d'isolateurs à plusieurs brins, en particulier dans des chaînes de suspension de lignes aeriennes de transport de courant à haute tension, chaînes qui comprennent au moins deux isolateurs à haute tension reliés de façon articulée par un palonnier (2, 3; 36) à la structure portante ou à la charge de la suspension, caractérisé en ce que des butées (6, 30; 32; 33a, 33b) sont disposées à l'intérieur de l'espace délimité par les isolateurs (4, 5) et les palonniers (2, 3; 36).

2. Dispositif selon la revendication 1, caractérisé en ce qu'un intervalle (7) relativement petit subsiste chaque fois entre la butée (6) et une des parties articulées l'une à l'autre (l'isolateur (4, 5) ou le palonnier (2, 3) par exemple) et en ce que cet intervalle (7) correspond à un angle d'oscillation ou de débattement (8) d'environ 2 à 5°.

3. Dispositif selon la revendication 1, caractérisé en ce qu'une pièce intercalaire (9) en matériau élastique est placée entre la butée (6) et l'isolateur (4, 5) voisin.

4. Dispositif selon une des revendications 1 à 3, caractérisé en ce que la butée (6) est réalisée comme un élément (10) qui fait saillie à peu près angle droit du bord (14, 15) correspondant du palonnier (2, 3) et s'étend à peu près parallèlement à l'isolateur (4, 5) sur une certaine longueur.

5. Dispositif selon la revendication 4, caractérisé en ce que la butée est une équerre (11) fixée par une branche (12) aux bords (14, 15) correspondants du palonnier (2, 3).

6. Dispositif selon la revendication 5, caractérisé en ce que l'équerre (11) est fixée au palonnier (2, 3) par des vis (16) et une plaque en coin (17) placées entre deux plaques (22, 23) formant le palonnier (2, 3).

7. Dispositif selon une des revendications 1 à 3, caractérisé en ce que la butée (6) est fixée par une patte (19) et un boulon (20) à une attache à oeil (21) formant la liaison articulée entre le palonnier (2) et l'isolateur (4).

8. Dispositif selon une des revendications 1 à 3, caractérisé en ce que la butée (6) est fixée à une attache à oeil (21) formant la liaison articulée entre l'isolateur (4) et la palonnier (2).

9. Dispositif selon la revendication 8, caractérisé en ce que la butée (6) est formée par un bras (31) essentiellement horizontal disposé sur l'attache (21) et dirigé vers l'axe vertical (40) de la chaîne de suspension (1).

10. Dispositif selon une des revendications 1 à 3 pour des chaînes d'isolateurs à plusieurs brins comprenant au moins deux isolateurs (4, 5) suspendus l'un sous l'autre et reliés entre eux de façon articulée, caractérisé en ce que la butée (30) est une pièce en forme de T qui est reliée par sa barre médiane (26), orientée à peu près horizontalement, à une attache à oeil (24) formant la liaison articulée entre les deux isolateurs suspendus l'un sous l'autre, et dont la barre transversale (27), orientée verticalement, présente des bords d'arrêt (28) parallèles aux isolateurs (4, 5).

11. Dispositif selon une des revendications 4 et 10, caractérisé en ce que la partie parallèle à l'isolateur (4, 5) de la butée (6; 11; 30) présente au moins un point de rupture prédestiné (18).

12. Dispositif selon la revendication 1, caractérisé en ce que, dans le cas d'une chaîne de suspension double de forme rectangulaire, il comprend au moins une paire de butées (6) dans la région du palonnier supérieur (2).

13. Dispositif selon la revendication 12, caractérisé en ce qu'il comprend une paire de butées (6) dans la région du palonnier supérieur (2) et une paire de butées (6) dans le région du palonnier inférieur (3).

14. Dispositif selon la revendication 1, caractérisé en ce que, dans le cas d'une chaîne de suspension en Y/V, des butées (32; 33a) sont disposées au moins dans les angles d'ouverture de l'Y et du V, formés par les paires d'isolateurs (4 respectivement 5) correspondants et s'ouvrant vers le haut.

15. Dispositif selon la revendication 14, caractérisé en ce que les butées (32, 32a), reliées à des attaches à oeil pour la fixation articulée des isolateurs (4, 5), présentent des faces d'arrêt (34, 35) qui renferment entre elles un angle aigu dans l'Y et dans le V.

16. Dispositif selon la revendication 14, caractérisé en ce que trois butées (33a, 33b) sont disposées à l'intérieur du triangle délimité par les isolateurs (5) et le palonnier (36).

**Claims**

1. Protection device against the effects of an insulator break in multiple-insulator strings, in particular suspension strings of high-voltage overhead lines, which insulator strings consist of at least two high-voltage insulators joined pivotally via spacers (2, 3; 36) to the load-bearing part of the suspension or to the part to be borne, characterised in that stops (6; 30; 32; 33a, 33b) are fitted within the space formed by the insulators (4, 5) and the spacers (2, 3; 36).

2. Protection device according to Claim 1, characterised in that a relatively small distance (7) remains between the stop (6) and, in each case, one of the parts (for example insulator 4, 5; spacer 2, 3) pivotally joined to one another and that this distance (7) corresponds to a pivoting angle (8) of about 2 to 5°.

3. Protection device according to Claim 1, characterised in that a transition piece (9) of an elastic material is present between the stop (6) and the insulator (4, 5) adjacent thereto.

4. Protection device according to one of Claims 1 to 3, characterised in that the stop (6) is designed as a component (10) which protrudes approximately at a right-angle from the corresponding edge (14, 15) of the spacer (2, 3) and is approximately parallel to the insulator (4, 5) over a certain length.

5. Protection device according to Claim 4, characterised in that the stop is designed as an angle (11) and that one leg (12) of the angle is fixed to the corresponding edges (14, 15) of the spacer (2, 3).

6. Protection device according to Claim 5, characterised in that the angle (11) is fixed to the spacer (2, 3) by means of screws (16), each taken through between two cheeks (22, 23) of the spacer (2, 3), and a wedge plate (17).

7. Protection device according to one of Claims 1 to 3, characterised in that the stop (6) is fixed to the eye (21) between the spacer (2) and the insulator (4) by means of a transition piece (19) and a bolt (20).

8. Protection device according to one of Claims 1 to 3, characterised in that the stop (6) is fixed to the eye (21) between the insulator (4) and the spacer (2).

9. Protection device according to Claim 8, characterised in that the stop (6) is designed as a substantially horizontal lug (31) which points towards the vertical centre line (40) of the suspension string unit (1) and is fitted to the eye (21).

10. Protection device according to one of Claims 1 to 3 for mutiple-insulator strings having at least two insulators (4, 5) suspended in series and pivotally joined to one another, characterised in that a T-shaped stop (30) consisting of an approximately horizontal web (26) and a vertical flange (27) having stop edges (28) parallel to the insulators (4, 5) is connected to the eye (24) between two insulators (4, 5).

11. Protection device according to one of Claims 4 or 10, characterised in that that part of the stop (6; 11; 30) which is parallel to the insulator (4, 5) has at least one predetermined breaking point (18).

12. Protection device according to Claim 1, characterised in that, in the case of twin-suspension strings of rectangular form, a pair of stops (6) is fitted at least on the upper spacer (2).

13. Protection device according to Claim 12, characterised in that a pair of stops (6) is fitted at each of the upper and lower spacers (2 and 3).

14. Protection device according to Claim 1, characterised in that, in the case of suspension strings in Y/V form, the stops (32; 33a) are arranged at least in the opening angle (37; 38) of the Y or V which is open upwards and is formed by the corresponding pairs in insulators (4 or 5 respectively).

15. Protection device according to Claim 14, characterised in that the stop faces (34, 35) of the stops (32, 33a) connected via the eyes to the insulators (4, 5) each form an acute angle with one another.

16. Protection device according to Claim 14, characterised in that three stops (33a, 33b) are fitted within the triangle formed by the insulators (5) of the spacer (36).

0019727

Fig. 1

Fig. 10

Fig. 6

Fig. 2

Fig. 3

Fig. 4

Fig. 5

1

0019727

Fig. 8

Fig. 9

Fig. 7

2